# EUROPÄISCHE PATENTANMELDUNG

(11) **EP 4 570 485 A1**
(43) Veröffentlichungstag der Anmeldung: **18.06.2025**
(21) Anmeldenummer: 24212267.9
(22) Anmeldetag: 12.11.2024
(51) Int. Cl.: B29D 30/52, B60C 11/00

(54) **LAUFSTREIFEN UND VERFAHREN ZUM AUSBILDEN EINES LAUFSTREIFENS ZUM HERSTELLEN EINES REIFENS FÜR EIN KRAFTFAHRZEUG**

(30) Priorität: 14.12.2023 DE 102023212675
(71) Anmelder: Continental Reifen Deutschland GmbH, 30175 Hannover (DE)
(72) Erfinder: Sharifi, Monir, 30175 Hannover (DE)
(74) Vertreter: Continental Corporation

(57) **Zusammenfassung**

Die Erfindung betrifft einen Laufstreifen (10) zum Herstellen eines Reifens für ein Kraftfahrzeug der einen ersten Laufstreifenabschnitt (11) und einen zweiten Laufstreifenabschnitt (12) umfasst, die jeweils ein erstes Mischungselement (11) und ein zweites Mischungselement (14) aufweisen. Das jeweilige erste Mischungselement (13) ist bezogen auf eine Stapelrichtung (S) des Laufstreifens (10) auf dem jeweiligen zweiten Mischungselement (14) angeordnet. Der Laufstreifen umfasst ferner ein drittes Mischungselement (15), das bezogen auf eine Laufrichtung (L) des Laufstreifens (10) zwischen dem ersten Laufstreifenabschnitt (11) und einen zweiten Laufstreifenabschnitt (12) angeordnet ist und diese miteinander verbindet. Das dritte Mischungselement (15) ist in Kontakt mit dem jeweiligen zweiten Mischungselement (14) und kontaktfrei zu dem jeweiligen ersten Mischungselement (13) ausgebildet. Weiterhin betrifft die Erfindung ein Verfahren zum Ausbilden eines Laufstreifens (10) für das Herstellen eines Reifens für ein Kraftfahrzeug.

## Beschreibung

Die vorliegende Erfindung betrifft ein Laufstreifen zum Herstellen eines Reifens für ein Kraftfahrzeug und ein Kraftfahrzeug mit einem solchen Laufstreifen. Die vorliegende Erfindung betrifft ferner ein Verfahren zum Ausbilden eines Laufstreifens zum Herstellen eines Reifens für ein Kraftfahrzeug.

Fahrzeuge weisen Reifen auf, die üblicherweise ein Gummibauteil in Form eines Kautschuk-Reifenprofils haben. Ein solcher Kautschuk-Reifen wird anhand eines Laufstreifens hergestellt, welcher üblicherweise mittels eines Extruders angefertigt wird. Ein Rohmaterial wird durch einen Trichter eingefüllt und in dem Extruder aufbereitet. Eine sich drehende Schnecke mischt das Material und befördert es bis zu einem Ausgang. Nachfolgend kann das Material als Materialbahn oder Laufstreifen für die Reifenherstellung weiterverarbeitet werden. Bei der Herstellung von Reifen oder zugehöriger Ausgangsprodukte ist es stets ein Anliegen, die Kosten gering zu halten und zudem einen sicheren und zuverlässigen Reifen anfertigen zu können.

Es ist eine Aufgabe, die der Erfindung zugrunde liegt, einen Laufstreifen bereitzustellen oder anzufertigen, der zu einer Herstellung eines sicheren Reifens beitragen kann.

Die Aufgabe wird jeweils durch die Merkmale der unabhängigen Patentansprüche gelöst. Vorteilhafte Weiterbildungen sind in den abhängigen Patentansprüchen angegeben.

Gemäß einem Aspekt der Erfindung umfasst ein Laufstreifen zum Herstellen eines Reifens für ein Kraftfahrzeug einen ersten Laufstreifenabschnitt und einen zweiten Laufstreifenabschnitt, die jeweils ein erstes Mischungselement und ein zweites Mischungselement umfassen. Das jeweilige erste Mischungselement ist bezogen auf eine Stapelrichtung des Laufstreifens auf dem jeweiligen zweiten Mischungselement angeordnet bzw. ausgebildet. Der Laufstreifen umfasst außerdem ein drittes Mischungselement, das bezogen auf eine Laufrichtung des Laufstreifens zwischen dem ersten Laufstreifenabschnitt und einen zweiten Laufstreifenabschnitt angeordnet bzw. ausgebildet ist und diese miteinander verbindet. Das dritte Mischungselement ist so ausgebildet, dass es in Kontakt mit dem jeweiligen zweiten Mischungselement und kontaktfrei zu dem jeweiligen ersten Mischungselement ist.

Mittels des beschriebenen Aufbaus des Laufstreifens kann zu einer kostengünstigen und zuverlässigen Herstellung eines sicheren Reifens beitragen werden. Der Laufstreifen umfasst mehrere Mischungselemente, die insbesondere im Hinblick auf Materialzusammensetzungen und physikalische Eigenschaften unterschiedlich ausgebildet sind. Der Laufstreifen ermöglicht mittels eines einfachen und übersichtlichen Aufbaus das Einhalten von behördlichen Sicherheitsvorgaben, wie sie zum Beispiel in Bezug auf elektrostatische Aufladung eines Kraftfahrzeugs und entsprechende Ableitfähigkeiten eben dieses vorgegeben sind. So soll zum Beispiel ein für den Straßenverkehr zugelassener Reifen eine elektrische Leitfähigkeit aufweisen, die mit einem elektrisch leitfähigen Widerstand kleiner als 10^10 Ohm korrespondiert.

Der Laufstreifen ist insbesondere in Form einer Materialbahn als Kautschuk- oder Gummibauteil ausgebildet und weist die drei oder mehrere Mischelemente auf. Das erste Mischelement ist insbesondere durch eine Profil-Mischung ausgebildet, welche in einem Reifen den Kontakt zur Fahrbahn herstellt. Das zweite Mischelement bildet einen Untergrund für das erste Mischelement, sodass das zweite Mischelement auch als Basis-Mischung und das erste Mischelement als Überzug- oder Kappenmischung bezeichnet werden kann. Das dritte Mischelement bildet zwischen den beiden Laufbahnabschnitten einen Mittelstreifen, der insbesondere einen vorgegebenen Anteil an Ruß enthält. Das dritte Mischelement kann auch als Carbon-Mittelstreifen oder mit dem englischen Begriff "Carbon Center Beam" bezeichnet werden. In der folgenden Beschreibung werden für das erste, zweite und dritte Mischelement daher unter anderem auch die Bezeichnungen Profil-Mischung, Basis-Mischung und Carbon-Mittelstreifen verwendet.

Es ist eine Erkenntnis im Zusammenhang mit der vorliegenden Erfindung, dass der Carbon-Mittelstreifen als Ableiter für elektrostatische Aufladungen dient und demgemäß eine vorgegebene elektrische Leitfähigkeit aufweisen soll. Ferner soll der Carbon-Mittelstreifen aber auch eine gewisse Klebrigkeit mitbringen, um einen sicheren und zuverlässigen Verbund der Mischelemente zu ermöglichen. Mittels des beschriebenen Aufbaus des Laufstreifens sind sowohl eine relativ hohe elektrische Leitfähigkeit als auch eine zuverlässige Klebrigkeit und ein sicherer Zusammenhalt der Komponenten des Laufstreifens realisierbar. Somit kann zu einer erhöhten Sicherheit des Kraftfahrzeugs und im Straßenverkehr beigetragen werden. Dies wird insbesondere durch den Kontakt des Carbon-Mittelstreifens zu der Basis-Mischung eingerichtet und den bewusst eingerichteten Nichtkontakt zu der Profilmischung, welche eine deutlich geringere Klebrigkeit zu dem Carbon-Mittelstreifen ermöglicht als die Basis-Mischung.

Gemäß einer Weiterbildung des Laufstreifens ist das jeweilige zweite Mischungselement so ausgebildet, dass es eine Seitenwand aufweist, die sich bezogen auf die Laufrichtung zwischen dem jeweiligen ersten Mischungselement und dem dritten Mischungselement erstreckt. Die Seitenwände der zweiten Mischungselemente bedecken jeweils eine Seitenwand des zugehörigen ersten Mischelements und bilden bezogen auf die Stapelrichtung einen Kanal oder eine Art Schornstein aus, in dem das dritte Mischungselement ausgebildet ist. In einem betriebsbereiten und rollenden Reifen würden dann beim Abrollen der Carbon-Mittelstreifen und die Seitenwände der Basis-Mischung jeweils kurzzeitig Kontakt zu dem Fahrbahnbelag haben. Somit kann eine besonders sichere elektrische Ableitung eingerichtet werden. Sollte der Carbon-Mittelstreifen bzw. das dritte Mischelement eine Unterbrechung oder einen Fehler aufweisen, so ist weiterhin eine elektrische Ableitung durch eine oder beide Seitenwände der Basis-Mischung bzw. des zweiten Mischelements gegeben, auch wenn die elektrische Leitfähigkeit geringer ist als die des Carbon-Mittelstreifens.

Gemäß einer weiteren Weiterbildung des Laufstreifens weisen die Mischungselemente jeweils eine vorgegebene elektrische Leitfähigkeit auf, wobei die elektrische Leitfähigkeit des dritten Mischelements größer ist als die des zweiten Mischelements, und die elektrische Leitfähigkeit des zweiten Mischelements größer ist als die des ersten Mischelements. Der Carbon-Mittelstreifen bzw. das dritte Mischungselement weist zum Beispiel eine elektrische Leitfähigkeit auf, deren Wert zwischen einschließlich 250% - 1250% des Wertes der elektrischen Leitfähigkeit des zweiten Mischelements beträgt. Das zweite Mischungselement weist zum Beispiel eine elektrische Leitfähigkeit auf, deren Wert mindestens doppelt so groß ist, wie der Wert der elektrischen Leitfähigkeit des ersten Mischelements. Somit kann eine zuverlässige elektrische Ableitfähigkeit des Laufstreifens und des späteren Reifens eingerichtet werden. Die elektrische Leitfähigkeit des jeweiligen Mischelements kann insbesondere durch den Anteil an Ruß in dem Ausgangsmaterial beeinflusst werden.

Gemäß einer weiteren Weiterbildung des Laufstreifens weist ein Ausgangsmaterial zum Ausbilden des dritten Mischungselements eine Mooney-Viskosität zwischen einschließlich 3-40 auf. Dadurch, dass der Carbon-Mittelstreifen nur Kontakt zu der Basis-Mischung hat, kann auch ein besonders flüssiges Ausgangsmaterial zum Ausbilden des dritten Mischungselements vorgesehen werden, sodass ein breiterer Einsatzbereich für viskose Materialien gegeben ist. Zum Beispiel weist das Ausgangsmaterial für das dritte Mischungselement eine Mooney-Viskosität kleiner oder gleich 40, 30, 20, 10 oder 5 auf.

Das dritte Mischelement kann zudem besonders schmal ausgeführt werden und bezogen auf die Laufrichtung eine Breite von 0,1-10,0 mm aufweisen. Auch die Seitenwände des zweiten Mischelements können schmal ausgeführt sein und jeweils eine Breite von 0,5-10,0 mm aufweisen.

Gemäß einem weiteren Aspekt der Erfindung umfasst ein Kraftfahrzeug einen Reifen, welcher eine Ausgestaltung des zuvor beschriebenen Laufstreifens aufweist. Dadurch, dass das Kraftfahrzeug eine Ausführungsform des Laufstreifens umfasst, sind Vorteile und Eigenschaften, die im Zusammenhang mit dem Laufstreifen beschrieben sind, auch für das Kraftfahrzeug offenbart und umgekehrt.

Gemäß einem weiteren Aspekt der Erfindung umfasst ein Verfahren zum Ausbilden eines Laufstreifens für das Herstellen eines Reifens für ein Kraftfahrzeug ein Bereitstellen eines jeweiligen Ausgangsmaterials zum Ausbilden des ersten Mischungselements, des zweiten Mischungselements und des dritten Mischungselements. Die Ausgangsmaterialien sind insbesondere im Hinblick auf elektrische Leitwiderstände bzw. elektrische Leitfähigkeiten unterschiedlich eingerichtet, sodass die jeweils ausgebildeten Mischelemente unterschiedliche elektrische Leitfähigkeiten aufweisen. Das Verfahren umfasst weiter ein Ausbilden des ersten Laufstreifenabschnitts mittels Ausbilden des ersten und des zweiten Mischungselements, sodass das erste Mischungselement bezogen auf die Stapelrichtung des Laufstreifens auf dem zweiten Mischungselement angeordnet ist. Das Verfahren umfasst weiter ein Ausbilden des zweiten Laufstreifenabschnitts mittels Ausbilden eines weiteren ersten und eines weiteren zweiten Mischungselements, sodass das weitere erste Mischungselement bezogen auf die Stapelrichtung auf dem weiteren zweiten Mischungselement angeordnet ist. Das Verfahren umfasst außerdem ein Ausbilden des dritten Mischungselements, sodass das dritte Mischungselement bezogen auf die Laufrichtung des Laufstreifens zwischen dem ersten und dem zweiten Laufstreifenabschnitt angeordnet ist und diese miteinander verbindet. Das dritte Mischungselement wird so ausgebildet, dass es in Kontakt mit dem jeweiligen zweiten Mischungselement und kontaktfrei zu dem jeweiligen ersten Mischungselement der beiden Laufstreifenabschnitte ist.

Mittels des beschriebenen Verfahrens können insbesondere die zuvor beschriebenen Ausführungsformen des Laufstreifens hergestellt werden, sodass Vorteile und Eigenschaften, die im Zusammenhang mit dem Laufstreifen beschrieben sind, auch für das Verfahren offenbart sind und umgekehrt. Die beschriebenen Verfahrensschritte können, sofern technisch realisierbar, nacheinander oder im Wesentlichen gleichzeitig erfolgen. Vorzugsweise werden die drei Mischungen in einem Co-Extrusionsprozess mittels eines Extrusionswerkzeugs gleichzeitig extrudiert. Alternativ können zum Beispiel die beiden Laufstreifenabschnitte angefertigt und nachfolgend das verbindende dritte Mischungselement in einen Spalt zwischen den beiden Laufstreifenabschnitten eingebracht werden.

In der Reifenindustrie muss der hergestellte Reifen gemäß behördlichen Vorgaben eine gewisse elektrische Leitfähigkeit aufweisen und bestimmte Zielwerte erfüllen. Ausschlaggebend hierfür ist, dass der Laufstreifen, der Kontakt zur Straße hat auch leitfähig ist. Um eine zuverlässige elektrische Leitfähigkeit einzurichten, kann der Carbon-Mittelstreifen aus einer Mischung hergestellt werden, die nicht der Basis-Mischung oder der Profil-Mischung entspricht. Es ist eine Erkenntnis im Zusammenhang mit der vorliegenden Erfindung, dass beim Ausbilden eines konventionellen elektrisch leitfähigen Mittelstreifens dieser relativ dünn ist und eventuell nicht durchgängig im Reifenprofil vorliegt. Dies betrifft insbesondere eine Ausdehnung zwischen Außenseite bis zur Innenseite des Reifens. Ferner besteht eine Herausforderung darin, eine zuverlässige Klebrigkeit zu den anderen Mischungen, insbesondere der Profil-Mischung einzurichten. Die Klebrigkeit dient insbesondere dem zuverlässigen Halt des Reifens im Hinblick auf seine in sich geschlossene Lauffläche.

Es gibt eine Vielzahl von möglichen Profil-Mischungen, die das erste Mischelement realisieren können. Entsprechend aufwendig ist es, eine Mischung für den Mittelstreifen auszubilden, welche die zuvor beschriebenen Anforderungen in Bezug auf sämtliche zur Verfügung stehenden Profil-Mischungen erfüllt. Es gibt aktuell allerdings eine deutlich geringere Anzahl an verfügbaren Basis-Mischungen, die zum Ausbilden des zweiten Mischelements eingesetzt werden. Zudem ermöglichen die verfügbaren Basis-Mischungen eine deutliche höhere Klebrigkeit zu dem Carbon-Mittelstreifen. Aufgrund des beschriebenen Aufbaus des Laufstreifen und des Kontakts des Carbon-Mittelstreifens mit der Basis-Mischung wird eine zuverlässige Klebrigkeit erzielt und zudem eine sichere elektrische Leitfähigkeit und Ableitung eingerichtet.

Insbesondere kann der Carbon-Mittelstreifen mittels einer individuellen Mischung angefertigt werden, die zwischen den leitfähigen Mischungen liegt, die das jeweilige zweite Mischungselement bzw. die Basis-Mischung des ersten und zweiten Laufstreifenabschnitts ausbilden. Somit müssen Anforderungen an die Klebrigkeit nur für relativ wenige Mischungen des zweiten Mischelements erfüllt sein und zudem bilden die Seitenwände des jeweiligen zweiten Mischungselement eine elektrische leitfähige Absicherung. Somit kann ein Risiko von elektrisch nicht oder schlecht leitfähigen Reifen signifikant reduziert werden.

Im Folgenden sind Ausführungsbeispiele der Erfindung anhand schematischer Zeichnungen erläutert. Es zeigen:
- Figuren 1-2: ein Ausführungsbeispiel eines Laufstreifens zum Herstellen eines Reifens für ein Kraftfahrzeug in verschiedenen Ansichten,
- Figur 3: ein Ablaufdiagramm für ein Verfahren zum Ausbilden des Laufstreifens nach den Figuren 1 und 2, und
- Figur 4: ein Ausführungsbeispiel eines Systems zum Ausbilden des Laufstreifens nach den Figuren 1 und 2.

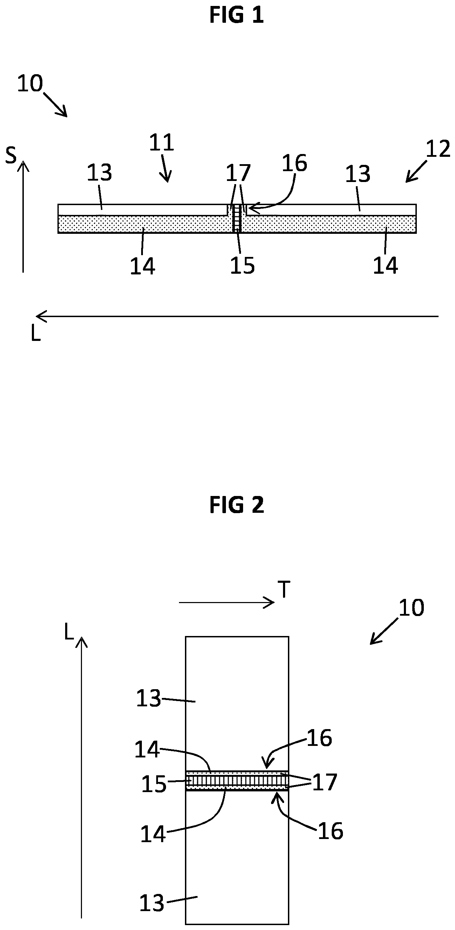

Figur 1 zeigt schematisch in einer Seitenansicht ein Ausführungsbeispiel eines Laufstreifens 10 zum Herstellen eines Reifens für ein Kraftfahrzeug. Figur 2 zeigt den Laufstreifen 10 gemäß Figur 1 in einer schematischen Aufsicht. Der Laufstreifen 10 weist einen ersten Laufstreifenabschnitt 11 und einen zweiten Laufstreifenabschnitt 12 auf. Die beiden Laufstreifenabschnitte 11, 12 weisen jeweils ein erstes Mischungselement 13 und ein zweites Mischungselement 14 auf, wobei das jeweilige erste Mischungselement 13 bezogen auf eine Stapelrichtung S des Laufstreifens 10 auf dem jeweiligen zweiten Mischungselement 14 angeordnet bzw. ausgebildet ist. Der Laufstreifen 10 umfasst außerdem ein drittes Mischungselement 15, das bezogen auf eine Laufrichtung L des Laufstreifens 10 zwischen dem ersten Laufstreifenabschnitt 11 und dem zweiten Laufstreifenabschnitt 12 angeordnet ist und diese miteinander verbindet. Das dritte Mischungselement 15 ist so ausgebildet, dass es in Kontakt mit dem jeweiligen zweiten Mischungselement 14 und kontaktfrei zu dem jeweiligen ersten Mischungselement 13 ist.

Das jeweilige zweite Mischungselement 14 weist eine Seitenwand 17 auf, die eine Seitenwand 16 des zugehörigen ersten Mischelements 13 bedeckt. Die Seitenwand 17 des jeweilige zweite Mischungselements 14 ist so ausgebildet, dass sie sich bezogen auf die Laufrichtung L zwischen dem jeweiligen ersten Mischungselement 13 und dem dritten Mischungselement 15 erstreckt. Die Seitenwände 17 des jeweiligen zweiten Mischungselement bilden somit bezogen auf die Stapelrichtung S einen Kanal oder eine Art Schornstein aus, der sich überwiegend länglich entlang einer Querrichtung T des Laufstreifens 10 quer zu der Laufrichtung L erstreckt. Das dritte Mischelement 15 hat somit nur oder überwiegend Kontakt zu dem zweiten Mischelement 14 und ermöglicht dadurch eine kostengünstige und zuverlässige Herstellung eines sicheren Reifens, der insbesondere im Hinblick auf Materialzusammenhalt und physikalische Eigenschaften, wie elektrische Leitfähigkeit, nutzbringend ausbildbar ist. Das dritte Mischelement 15 kann sich entlang des ganzen Querschnitts des Laufstreifens 10 erstrecken, wie es in Figur 2 illustriert ist, oder teilweise, sodass es seitlich entlang der Längsrichtung L von den Seitenwänden 17 umgeben ist. Die Seitenwände 17 der zweiten Mischungselemente 14 können somit gemäß einer Aufsicht wie in Figur 2 alternativ einen geschlossenen Rahmen um das dritte Mischelement 15 bilden.

Der Laufstreifen 10 ist insbesondere in Form einer Materialbahn als Kautschuk- oder Gummibauteil ausgebildet und weist die Mischelemente 13, 14 und 15 auf. Das erste Mischelement 13 ist insbesondere durch eine Profil-Mischung ausgebildet, welche in einem Reifen den Kontakt zur Fahrbahn herstellt. Das zweite Mischelement 14 bildet einen Untergrund für das erste Mischelement 13, sodass das zweite Mischelement 14 auch als Basis-Mischung und das erste Mischelement 13 als Überzug- oder KappenMischung bezeichnet werden kann. Das erste Mischelement 13 bildet somit eine spätere äußere Umfangsfläche und das zweite Mischelement 14 eine innere Umfangsfläche des Reifens aus. Das dritte Mischelement 15 bildet zwischen den beiden Laufbahnabschnitten 11, 12 einen Mittelstreifen. Das dritte Mischelement 15 kann auch als Carbon-Mittelstreifen oder mit dem englischen Begriff "Carbon Center Beam" bezeichnet werden.

Die Mischelemente 13, 14, 15 sind insbesondere im Hinblick auf eine jeweilige elektrische Leitfähigkeit vorgegeben ausgebildet, wobei die elektrische Leitfähigkeit des dritten Mischelements 15 deutlich größer ist als die des zweiten Mischelements 14, welche wiederum größer ist als die des ersten Mischelements 13. Das dritte Mischelement 15 stellt somit eine zuverlässige elektrische Ableitung in dem Reifen bereit und zudem ermöglichen die Seitenwände 17 des jeweiligen zweiten Mischelements 14 eine elektrische Ableitung. In Bezug auf die obigen Begriffsalternativen besteht eine höhere Klebrigkeit zwischen dem Carbon-Mittelstreifen und der Basis-Mischung als zwischen dem Carbon-Mittelstreifen und der Überzugs-Mischung. Dadurch, dass der Carbon-Mittelstreifen in Kontakt mit der Basis-Mischung und nicht in Kontakt mit der Überzugs-Mischung ist, kann somit zu einem verbesserten Halt der Laufstreifenabschnitt 11, 12 beigetragen und zudem eine zuverlässige elektrische Leitfähigkeit zum Ableiten elektrostatischer Aufladung eines entsprechenden Kraftfahrzeugs eingerichtet werden.

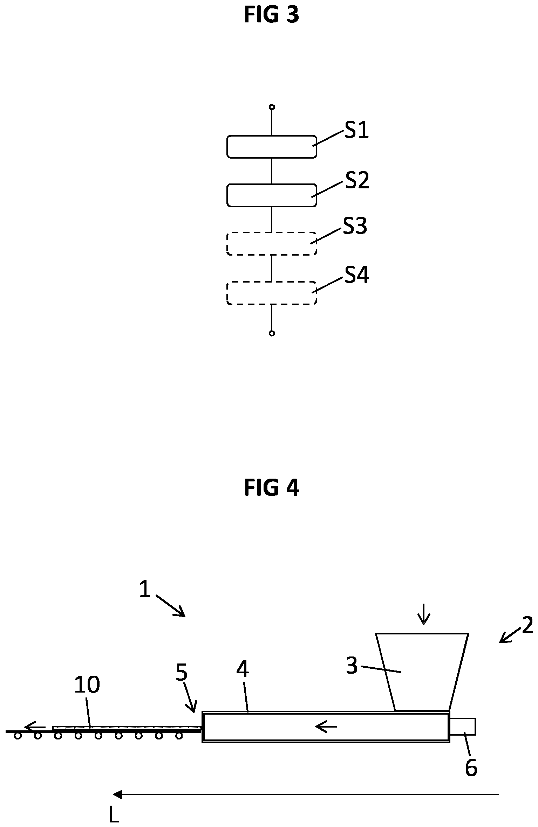

Figur 3 zeigt ein Ablaufdiagramm für ein Verfahren zum Anfertigen des Laufstreifens 10 zum Herstellen eines Reifens für ein Kraftfahrzeug, das zum Beispiel mittels eines Systems 1 gemäß Figur 4 durchgeführt werden kann. In einem Schritt S1 werden jeweilige Ausgangsmaterialien zum Ausbilden des ersten, zweiten und dritten Mischungselements 13, 14, 15 bereitgestellt.

In einem Schritt S2 werden die jeweiligen Ausgangsmaterialien dem System 1 zugeführt, welches einen Extruder 2, zum Beispiel einen Kalteinzug-Extruder, umfasst, in dem ein Schneckenelement zum Verarbeiten des eingespeisten Materials bzw. der jeweiligen Mischung angeordnet ist. Die jeweilige Mischung wird in einen Behälter 3 des Extruders 2 eingespeist und mittels des Schneckenelements in einem Schneckenzylinder 4 gemischt und entlang einer Massenverarbeitungsrichtung bzw. der Laufrichtung L zu einem Ausgang 5 des Schneckenzylinders 4 getrieben. Das Schneckenelement wird mittels einer Antriebseinheit 6, zum Beispiel einem Elektromotor, angetrieben und in Rotation versetzt. Nach Austritt der verarbeiteten Masse durch den Ausgang 5 wird zum Beispiel mittels mehrerer Führungskanäle und/oder Formwerkzeuge der Laufstreifen 10 ausgeformt und somit eine Materialbahn zum Herstellen eines Reifens für ein Kraftfahrzeug bereitgestellt.

In dem Schritt S2 können die jeweiligen Mischungselement 13, 14 und 15 zeitlich parallel oder zeitversetzt ausgebildet werden. Vorzugsweise werden die Mischungselemente 13, 14, 15 in einem Co-Extrusionsprozess mittels eines Extrusionswerkzeugs gleichzeitig extrudiert.

Alternativ kann zum Beispiel können in dem Schritt S2 zuerst die zweiten Mischungselemente 14 mit Seitenwänden 17 ausgebildet werden. In einem weiteren Schritt S3 können dann nachfolgend die ersten Mischungselement 13 auf den jeweiligen zweiten Mischungselementen 14 ausgebildet werden. In einem weiteren Schritt S4 kann dann nachfolgend das dritte Mischungselement 15 als Carbon-Mittelstreifen ausgebildet werden, welcher die Laufstreifenabschnitte 11, 12 mit den jeweiligen ersten und zweiten Mischungselementen 13, 14 verbindet.

### Bezugszeichenliste

- 1: System
- 2: Extruder
- 3: Behälter
- 4: Schneckenzylinder mit Schneckenelement
- 5: Ausgang des Schneckenzylinders
- 6: Antriebseinheit
- 10: Laufstreifen
- 11: erster Laufstreifenabschnitt
- 12: zweiter Laufstreifenabschnitt
- 13: erstes Mischungselement
- 14: zweites Mischungselement
- 15: drittes Mischungselement
- 16: Seitenwand des ersten Mischungselement
- 17: Seitenwand des zweiten Mischungselement

- L: Laufrichtung des Laufstreifens
- S: Stapelrichtung des Laufstreifens
- T: Querrichtung des Laufstreifens

## Patentansprüche

1. Laufstreifen (10) zum Herstellen eines Reifens für ein Kraftfahrzeug, aufweisend:
- einen ersten Laufstreifenabschnitt (11) und einen zweiten Laufstreifenabschnitt (12), die jeweils ein erstes Mischungselement (13) und ein zweites Mischungselement (14) umfassen, wobei das jeweilige erste Mischungselement (13) bezogen auf eine Stapelrichtung (S) des Laufstreifens (10) auf dem jeweiligen zweiten Mischungselement (14) angeordnet ist, und
- ein drittes Mischungselement (15), das bezogen auf eine Laufrichtung (L) des Laufstreifens (10) zwischen dem ersten Laufstreifenabschnitt (11) und dem zweiten Laufstreifenabschnitt (12) angeordnet ist und diese miteinander verbindet, wobei das dritte Mischungselement (15) in Kontakt mit dem jeweiligen zweiten Mischungselement (14) und kontaktfrei zu dem jeweiligen ersten Mischungselement (13) ausgebildet ist.

2. Laufstreifen (10) nach Anspruch 1, bei dem das jeweilige zweite Mischungselement (14) so ausgebildet ist, dass es eine Seitenwand (17) aufweist, die sich bezogen auf die Laufrichtung (L) zwischen dem jeweiligen ersten Mischungselement (13) und dem dritten Mischungselement (15) erstreckt.

3. Laufstreifen (10) nach Anspruch 2, bei dem die Seitenwände (17) des jeweiligen zweiten Mischungselement (14) bezogen auf die Stapelrichtung (S) einen Kanal ausbilden, in dem das dritte Mischungselement (15) ausgebildet ist.

4. Laufstreifen (10) nach einem der vorhergehenden Ansprüche, bei dem die jeweiligen Mischungselemente (13, 14, 15) jeweils eine vorgegebene elektrische Leitfähigkeit aufweisen, wobei die elektrische Leitfähigkeit des dritten Mischelements (15) größer ist als die des zweiten Mischelements (14), und die elektrische Leitfähigkeit des zweiten Mischelements (14) größer ist als die des ersten Mischelements (13).

5. Laufstreifen (10) nach einem der vorhergehenden Ansprüche, bei dem das dritte Mischungselement (15) eine elektrische Leitfähigkeit aufweist, deren Wert zwischen einschließlich 250% - 1250% des Wertes der elektrischen Leitfähigkeit des zweiten Mischelements (14) beträgt.

6. Laufstreifen (10) nach einem der vorhergehenden Ansprüche, bei dem das zweite Mischungselement (14) eine elektrische Leitfähigkeit aufweist, deren Wert mindestens doppelt so groß ist wie der Wert der elektrischen Leitfähigkeit des ersten Mischelements (13).

7. Laufstreifen (10) nach einem der vorhergehenden Ansprüche, bei dem ein Ausgangsmaterial zum Ausbilden des dritten Mischungselements (15) eine Mooney-Viskosität zwischen einschließlich 3-40 aufweist.

8. Laufstreifen (10) nach einem der vorhergehenden Ansprüche, bei dem das dritte Mischungselement (15) bezogen auf die Laufrichtung (L) eine Breite von 1-10 mm aufweist.

9. Kraftfahrzeug, aufweisend:
einen Reifen mit einem Laufstreifen (10) nach einem der vorhergehenden Ansprüche.

10. Verfahren zum Ausbilden eines Laufstreifens (10) für das Herstellen eines Reifens für ein Kraftfahrzeug, umfassend:
- Bereitstellen eines jeweiligen Ausgangsmaterials zum Ausbilden eines ersten Mischungselements (13), eines zweiten Mischungselements (14) und eines dritten Mischungselements (15),
- Ausbilden eines ersten Laufstreifenabschnitts (11) mittels Ausbilden des ersten und des zweiten Mischungselements (13, 14), sodass das erste Mischungselement (13) bezogen auf eine Stapelrichtung (S) des Laufstreifens (10) auf dem zweiten Mischungselement (14) angeordnet ist,
- Ausbilden eines zweiten Laufstreifenabschnitts (12) mittels Ausbilden eines weiteren ersten und eines weiteren zweiten Mischungselements (13, 14), sodass das weitere erste Mischungselement (13) bezogen auf die Stapelrichtung (S) des Laufstreifens (10) auf dem weiteren zweiten Mischungselement (14) angeordnet ist, und
- Ausbilden des dritten Mischungselements (15), sodass das dritte Mischungselement (15) bezogen auf eine Laufrichtung (L) des Laufstreifens (10) zwischen dem ersten Laufstreifenabschnitt (11) und dem zweiten Laufstreifenabschnitt (12) angeordnet ist und diese miteinander verbindet, und das dritte Mischungselement (15) in Kontakt mit dem jeweiligen zweiten Mischungselement (14) und kontaktfrei zu dem jeweiligen ersten Mischungselement (13) ausgebildet ist.
